# EUROPÄISCHE PATENTANMELDUNG

(11) **EP 4 517 124 A1**
(43) Veröffentlichungstag der Anmeldung: **05.03.2025**
(21) Anmeldenummer: 24187282.9
(22) Anmeldetag: 09.07.2024
(51) Int. Cl.: F16D 51/20, F16D 65/00, F16D 65/08, F16D 65/10

(54) **REIBPARTNER FÜR EINE TROMMELBREMSVORRICHTUNG MIT EINER STAUBSAMMELANORDNUNG EINES FAHRZEUGS, INSBESONDERE NUTZFAHRZEUGS, TROMMELBREMSVORRICHTUNG, FAHRZEUG**

(30) Priorität: 28.08.2023 DE 102023123019
(71) Anmelder: ZF CV Systems Europe BV, 1170 Brüssel (BE)
(72) Erfinder: RICKE, Janik, 31311 Uetze (DE)
(74) Vertreter: Rabe, Dirk-Heinrich

(57) **Zusammenfassung**

Reibpartner (100) für eine Trommelbremsvorrichtung (210) mit einer Staubsammelanordnung (220) eines Fahrzeugs (200a), insbesondere Nutzfahrzeugs (200b); wobei der Reibpartner (100) einen Reibkörper (105) zum Kontaktieren eines zweiten Reibkörpers (115) eines zweiten Reibpartners (110) aufweist; der Reibkörper (105) eine strukturierte Vertiefungsanordnung (108) aufweist; und die Vertiefungsanordnung (108) dazu eingerichtet ist, bei einer relativen Rotationsbewegung (R) des Reibpartners (100) gegenüber dem zweiten Reibpartners (110) einen Luftstrom (F) zum gerichteten Transport von Bremspartikeln (120) zu der Staubsammelanordnung (220) zu erzeugen.

## Beschreibung

Die Offenbarung betrifft einen Reibpartner für eine Trommelbremsvorrichtung mit einer Staubsammelanordnung eines Fahrzeugs, insbesondere Nutzfahrzeugs. Die Offenbarung betrifft auch eine Trommelbremsvorrichtung für ein Fahrzeug, insbesondere Nutzfahrzeug, und ein Fahrzeug, insbesondere Nutzfahrzeug.

Das Fahrzeug, insbesondere Nutzfahrzeug, wird im Folgenden auch als Fahrzeug bezeichnet.

Trommelbremsen der vorbezeichneten Art sind bekannt und werden in Fahrzeugen als Reibbremse zum Verzögern der Bewegung des Fahrzeuges eingesetzt. Reibbremsen funktionieren nach dem Reibungsprinzip. Dabei werden Bremsbeläge mit einer Bremstrommel in Reibwirkung gebracht, um eine Bremswirkung auf das Fahrzeug zu erzeugen. Durch die Reibung zwischen den Bremsbelägen und der Bremstrommel entsteht ein Abrieb an den Reibstoffen der Bremsbeläge und an der Bremstrommel, der Bremsstaub, auch Reibpartikel, Bremsstaubpartikel und/oder Bremspartikel genannt. Bremsstaubpartikel sind Staubpartikel in einer Größenordnung von beispielsweise kleiner 10 µm, sogenannter Feinstaub, der aufgrund seiner geringen Partikelgröße und seiner chemischen Zusammensetzung als gesundheitsgefährdend und umweltbelastend eingestuft sein kann. Eine Abgabe des Feinstaubs an die Umwelt ist entsprechend nicht gewünscht. Es ist daher von allgemeinem Interesse, Scheibenbremsen so zu gestalten, dass eine Abgabe des beim Bremsvorgang entstehenden Feinstaubs an die Umwelt möglichst verhindert wird.

Für Trommelbremsen ist es bekannt, zur besseren Kühlung und auch zum Führen von Bremspartikeln einen Luftstrom zu verwenden.

DE 10 2021 204 132 A1 offenbart eine Trommelbremse für ein Kraftfahrzeug, die eine Bremstrommel und eine Ankerplatte umfasst. Die Bremstrommel und die Ankerplatte bilden ein Gehäuse, wobei zwischen der Ankerplatte und der Bremstrommel wenigstens ein Luftspalt ausgebildet ist. Ein Magnetring umringt eine äußere Umfangsseite des Gehäuses, wobei der Magnetring derart zum Luftspalt ausgerichtet ist, dass ein Partikelstrom mit Bremspartikeln aus einem Inneren des Gehäuses auf ein Magnetfeld des Magnetrings trifft.

Das Vorsehen eines Magnetrings ist jedoch aufwändig. Das Sammeln der Bremspartikel durch das Magnetfeld kann nur mit Materialen mit bestimmten magnetischen Eigenschaften erzielt werden und kann somit nur mit geeigneten Bremsbelägen funktionieren.

Ferner ist es bekannt, über Nuten die Trommelbremse zu Kühlen und/oder ein Abschätzen und/oder ein Beeinflussen des Verschleißes zu erzielen.

DE 4 036 908 A1 offenbart eine Nutausbildung. Zur Verringerung der Temperatur und des Abriebs bei der Betätigung von Reibbelägen wird vorgeschlagen, diese Beläge mit Nuten zu versehen, die so ausgebildet sind, dass sie von der Vorderkante des Reibbelages sich stetig verjüngend annähernd in Drehrichtung verlaufen.

DE 196 48 908 A1 offenbart eine Bremstrommel für eine Trommelbremse mit einer um die Bremstrommelachse verlaufenden Reibfläche, wobei die Reibfläche mit zumindest einer Nut versehen ist, die einen in sich geschlossenen Nutverlauf aufweist und die sich über die gesamte Ausdehnung der Reibfläche in Umfangsrichtung erstreckt.

EP 0 486 772 B1 offenbart eine Nutausbildung. Zur Verringerung der Temperatur und des Abriebs bei der Betätigung von Reibbelägen wird vorgeschlagen, diese Beläge mit Nuten zu versehen, die so ausgebildet sind, dass sie von der Vorderkante des Reibbelages sich stetig verjüngend annähernd in Drehrichtung verlaufen.

Jedenfalls ist es angestrebt, die bei einem Reiben und somit bei einem Verschleiß anfallenden Bremspartikel möglichst nicht während des Betreibens des Fahrzeugs in die Umwelt zu entlassen.

Der Offenbarung liegt die Aufgabe zugrunde, den Stand der Technik zu bereichern und Aspekte des Standes der Technik zu verbessern. Insbesondere löst die Offenbarung die Aufgabe, ein effektives und einfaches Sammeln von Bremspartikeln einer Trommelbremse zu ermöglichen.

Die Aufgabe wird durch ein Verfahren nach Anspruch 1 sowie den Gegenständen nach den weiteren unabhängigen Ansprüchen gelöst. Die Unteransprüche geben Weiterbildungen der Offenbarung an.

Gemäß einem Aspekt der Offenbarung wird ein Reibpartner für eine Trommelbremsvorrichtung mit einer Staubsammelanordnung eines Fahrzeugs, insbesondere Nutzfahrzeugs, bereitgestellt; wobei der Reibpartner einen Reibkörper zum Kontaktieren eines zweiten Reibkörpers eines zweiten Reibpartners aufweist; der Reibkörper eine strukturierte Vertiefungsanordnung aufweist; und die Vertiefungsanordnung dazu eingerichtet ist, bei einer relativen Rotationsbewegung des Reibpartners gegenüber dem zweiten Reibpartners einen Luftstrom zum gerichteten Transport von Bremspartikeln zu der Staubsammelanordnung zu erzeugen.

Dabei wurde erkannt, dass eine Staubsammelanordnung bereitgestellt werden kann, um ein Ansammeln der Bremspartikel in der Bremstrommel und gleichzeitig eine Emission in die Umwelt zu vermeiden und um die Bremspartikel sammeln und/oder gezielt abführen zu können. Ferner wurde erkannt, dass ein Luftstrom beziehungsweise Fluidstrom induziert werden kann, der die Bremspartikel gerichtet leiten und zu der Staubsammelanordnung führen kann.

Dafür wird, ähnlich zu der Technik der hydrodynamischen Luftlager und/oder Spiralrillenlager, insbesondere sogenannter Heringbone-Lager, eine bestimmte Vertiefungsanordnung beziehungsweise Rillengeometrie vorgesehen. Durch die Rillengeometrie wird bei einem derartigen Lager ein Luftstrom erzeugt, der es möglich macht, dass ein Rotor bei ausreichender Umdrehung (Abhebedrehzahl) abhebt und auf einem Luftpuffer läuft. D.h. es wird durch eine Rotationsbewegung ein gerichteter Fluidstrom erzeugt, welcher in einem Druck resultiert, mit dem der Rotor getragen wird. Diese grundsätzliche Idee wird gemäß der Offenbarung für eine Trommelbremse angewendet.

Kern der Offenbarung ist es daher, als strukturierte Vertiefungsanordnung eine Geometrie auf die Reibfläche des Reibpartners aufzubringen, um bei einer relativen Rotationsbewegung zwischen dem Reibpartner und dem zweiten Reibpartner einen Fluidstrom innerhalb der Bremstrommel zu erzeugen. Der Fluidstrom sorgt innerhalb der Trommelbremse dafür, dass die Bremspartikel zu der Sammelanordnung geleitet werden können.

Sowohl Magnete als auch eine aktives Saugsystem sind somit entbehrlich. Allein durch den gerichteten Fluidstrom ist es möglich, die Bremspartikel gezielt zu der ortsfesten Staubsammelanordnung zu leiten.

Optional umfasst die Vertiefungsanordnung eine Mehrzahl von außermittig angeordnete Spiralrillen. Dabei bezeichnet eine Spiralrille eine wenigstens teilweise spiralförmig ausgebildete Rille beziehungsweise Vertiefung, also um eine Vertiefung mit einer sich entlang ihrer Kontur ändernden Krümmung. Die Spiralrille windet sich um einen angenommen Spiralmittelpunkt. Die außermittige Anordnung der Spiralrille bedeutet, dass der angenommene Spiralmittelpunkt außerhalb des Reibkörpers angeordnet ist. Dabei wurde erkannt, dass die Spiralrillengeometrie außermittig aufgebracht werden kann, um den Fluidstrom in eine gewünschte Pumprichtung leiten zu können und um zu gewährleisten, dass die Bremspartikel nicht zu den Reibkörper geleitet werden und die Vertiefungsanordnung so verstopfen. Damit kann die Leitung des Fluidstroms und somit der Bremspartikel in die Staubsammelanordnung unterstützt werden.

Optional definiert die Trommelbremsvorrichtung eine Achse, und die Vertiefungsanordnung umfasst eine Mehrzahl von gegenüber der Achse geneigter Nuten. Die Nuten können dabei gerade und/oder gekrümmt sein. Die Achse kann dabei die Rotationsachse einer Bremstrommel der Trommelbremsvorrichtung sein. Durch die Neigung der Nuten gegenüber der Achse kann der Fluidstrom erzeugt werden.

Optional ist der Reibpartner ein Bremsbelag. Dabei wurde erkannt, dass es möglich ist, die strukturierte Vertiefungsanordnung in den Bremsbelag als einen der Reibpartner einzubringen. Beim Fahren rotiert eine Bremstrommel und erzeugt so eine relative Rotationsbewegung zwischen dem Bremsbelag und der Bremstrommel, womit der Luftstrom erzeugt werden kann.

Optional weist die Vertiefungsanordnung eine Tiefe auf, die wenigstens einer Stärke des Bremsbelags entspricht. Die Stärke des Bremsbelags ist dabei die radiale Ausdehnung des Reibkörpers. Alternativ ist die Stärke des Bremsbelags kleiner als die radiale Ausdehnung des Reibkörpers und definiert den ermöglichten und/oder zugelassenen Materialabtrag durch Verschleiß des Bremsbelags. Beispielsweise kann die Tiefe der Vertiefungsanordnung im Bereich von 1 bis 5 mm liegen, um einen Verschleiß des Bremsbelags zu ermöglichen, wobei trotz des Verschleißes der Luftstrom erzeugt werden kann.

Optional ist der Reibpartner eine Bremstrommel. Dabei wurde erkannt, dass es möglich ist, die strukturierte Vertiefungsanordnung in die Bremstrommel als einen der Reibpartner einzubringen. Beim Fahren rotiert die Bremstrommel und erzeugt so eine relative Rotationsbewegung zwischen einem Bremsbelag und der Bremstrommel, womit der Luftstrom erzeugt werden kann.

Optional weist die Vertiefungsanordnung eine Tiefe von bis zu 0,5 cm auf. Dabei wurde erkannt, dass eine vergleichsweise geringe Tiefe ausreichend sein kann, da ein durch den Verschleiß erzeugter Materialabtrag der Bremstrommel typischerweise geringer ist als der der Bremsbeläge.

Gemäß einem Aspekt der Offenbarung wird eine Trommelbremsvorrichtung für ein Fahrzeug, insbesondere Nutzfahrzeug, bereitgestellt. Die Trommelbremsvorrichtung umfasst einen oben beschriebenen Reibpartner, einen zweiten Reibpartner und eine Staubsammelanordnung. Dabei kann der Reibpartner ein oder mehrere der oben als optional und/oder vorteilhaft beschrieben Merkmale aufweisen, um einen damit verbundenen technischen Effekt zu erzeugen.

Optional weist die Trommelbremsvorrichtung eine Ankerplatte und eine umlaufende Dichtung zum Abdichten einer Bremstrommel gegen die Ankerplatte auf, und die Dichtung und/oder die Ankerplatte weist mindestens eine Belüftungsöffnung auf. Dabei wurde erkannt, dass durch eine gezielte Belüftung durch die Belüftungsanordnung der Luftstrom, dessen Erzeugung beziehungsweise dessen Lenkung verbessert werden kann. Die Dichtung und/oder die Ankerplatte sowie die Staubsammelanordnung sind statische Bestandteile der Trommelbremsvorrichtung. Die Anordnung der Belüftungsöffnung sowie der Staubsammelanordnung kann somit definieren, wie der Luftstrom zum Transport der Bremspartikel zu der Staubsammelvorrichtung zu verlaufen hat. Somit kann die Anordnung Anforderungen an die Geometrie der Vertiefungsanordnung definieren. Um ein Austreten des Bremsstaubs zu verhindern, ist die Bremstrommel gegen die Ankerplatte mit einer umlaufenden Dichtung abgedichtet. Um trotzdem einen Fluidstrom zu ermöglichen, sind in der Dichtung und/oder der Ankerplatte Belüftungsöffnungen angeordnet, beispielsweise mit einer Ausdehnung von je 3cm im Umfangsrichtung. Durch die Belüftungsöffnungen kann Luft angesaugt werden. Die Öffnungen und der resultierende Fluidstrom haben ebenfalls eine kühlende Wirkung. Thermische Belastung kann bei Trommelbremsen, besonders bei gekapselten, ein Problem sein, und kann durch die Belüftung gemindert werden.

Optional ist die mindestens eine Belüftungsöffnung in einem im montierten Zustand oberen Bereich der Trommelbremsvorrichtung angeordnet; die Staubsammelanordnung ist in einem im montierten Zustand in einem unteren Bereich der Trommelbremsvorrichtung angeordnet; und die Staubsammelanordnung ist derart angeordnet, dass Bremspartikeln von dem Luftstrom zu der Staubsammelanordnung gefördert werden. Die Belüftungsöffnung kann in der oberen Hälfte der Bremstrommel angeordnet sein, damit auf der Unterseite die Staubsammelanordnung angeordnet werden kann. Die Bremspartikel können schwerkraftgestützt in der Staubsammelanordnung zugeführt und dort gesammelt und/oder gesammelt abgeführt werden.

Gemäß einem Aspekt der Offenbarung wird ein Fahrzeug, insbesondere Nutzfahrzeug, umfassend die oben beschriebene Trommelbremsvorrichtung bereitgestellt. Dabei kann die Trommelbremsvorrichtung ein oder mehrere der oben als optional und/oder vorteilhaft beschrieben Merkmale aufweisen, um einen damit verbundenen technischen Effekt zu erzeugen.

Weitere Merkmale der Offenbarung sowie deren technische Effekte ergeben sich aus den Figuren und der Beschreibung der in den Figuren gezeigten bevorzugten Ausführungsformen. Dabei zeigen
- Fig. 1: eine schematische Darstellung eines Fahrzeugs, insbesondere Nutzfahrzeugs, gemäß einem Aspekt der Offenbarung;
- Fig. 2: eine perspektivische Darstellung von Komponenten einer Trommelbremsvorrichtung gemäß einem Aspekt der Offenbarung;
- Fig. 3: eine perspektivische Darstellung von Bremsbelägen einer Trommelbremsvorrichtung gemäß einem Aspekt der Offenbarung;
- Fig. 4: eine schematische Darstellung einer Draufsicht auf einen Bremsbelag einer Trommelbremsvorrichtung gemäß einem Aspekt der Offenbarung; und
- Fig. 5: eine schematische Darstellung einer Draufsicht auf einen Bremsbelag einer Trommelbremsvorrichtung gemäß einem Aspekt der Offenbarung.

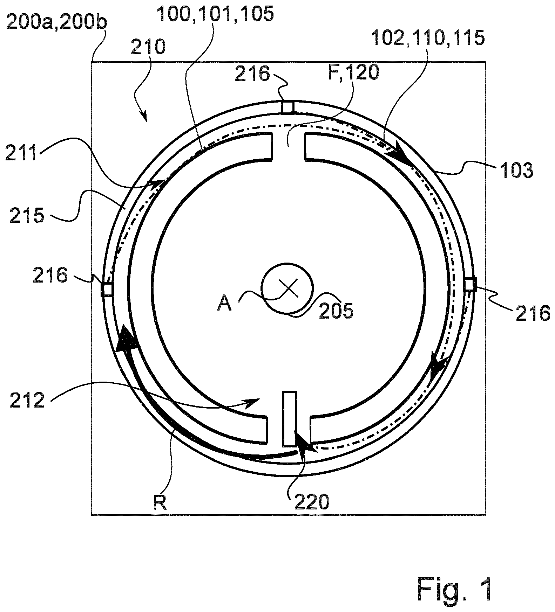

Figur 1 zeigt eine schematische Darstellung eines Fahrzeugs 200a, insbesondere Nutzfahrzeugs 200b, gemäß einem Aspekt der Offenbarung. Das Fahrzeug 200a, insbesondere Nutzfahrzeugs 200b, wird im Folgenden als Fahrzeug 200a, 200b bezeichnet. Das Fahrzeug 200a, 200b ist ein Landfahrzeug, beispielsweise ein Zugfahrzeug und/oder ein Anhängefahrzeug eines mehrgliedrigen Fahrzeugs, ein eingliedriges Fahrzeug und/oder ein Bus.

Die Darstellung des Fahrzeugs 200a, 200b beschränkt sich auf die für die Offenbarung wesentlichen Komponenten, wobei vorliegend verstanden werden soll, dass das Fahrzeug 200a, 200b neben den abgebildeten Komponenten weitere für den Betrieb des Fahrzeugs 200a, 200b erforderliche Komponenten, wie zum Beispiel einen Antriebsstrang, ein Fahrwerk und/oder eine Karosserie, aufweist. Auf die Darstellung derartiger Komponenten ist zugunsten einer Wiedergabe der Offenbarung verzichtet worden.

Das Fahrzeug 200a, 200b weist eine Trommelbremsvorrichtung 210 zum Verzögern der Bewegung des Fahrzeugs 200a, 200b auf. Das Fahrzeug 200a, 200b weist optional ein pneumatisches System (nicht gezeigt) auf, das dazu eingerichtet, die optional pneumatische und/oder elektropneumatische Trommelbremsvorrichtung 210 zum Aktuieren der Trommelbremsvorrichtung 210 mit Druckluft zu beaufschlagen. Alternativ oder zusätzlich kann die Trommelbremsvorrichtung 210 hydraulisch und/oder elektro-mechanisch aktuierbar sein.

Die Trommelbremsvorrichtung 210 umfasst einen Reibpartner 100, einen zweiten Reibpartner 110, eine Staubsammelanordnung 220, eine Ankerplatte 103 und eine umlaufende Dichtung 215.

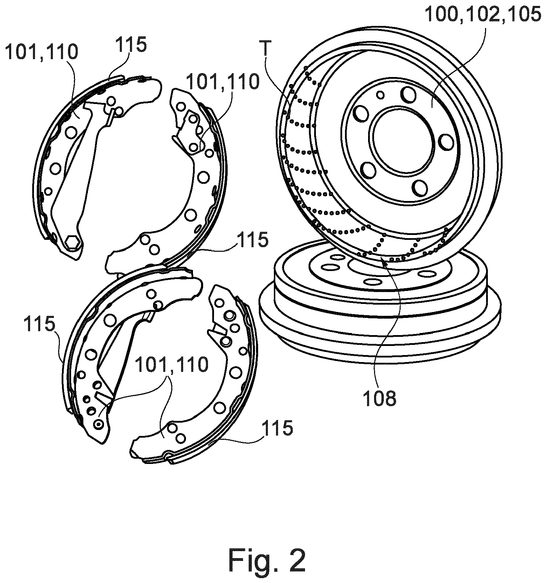

In der in Figuren 1 und 3 bis 5 ist der Reibpartner 100 einer von zwei Bremsbelägen 101 und der zweite Reibpartner 110 ist eine Bremstrommel 102. In der in Figur 2 gezeigten Ausführungsform ist der Reibpartner 100 die Bremstrommel und der zweite Reibpartner 110 ist einer von zwei Bremsbelägen 101.

Die Bremstrommel 102 ist dazu eingerichtet, um eine mit einem Kreuz indizierte und in Figur 1 in die Bildebene hineinragende Achse A zu rotieren. Dafür ist die Bremstrommel 102 an einer Radnabe 205 um die Achs A rotierbar angeordnet. Die Bremsbeläge 101 sind rotationsfest angeordnet. Beispielsweise sind die Bremsbeläge 101 an der Ankerplatte 103 rotationsfest und zum Betätigen bewegbar angeordnet. Daher entsteht bei einer Bewegung des Fahrzeugs 200a, 200b eine Rotation der Bremstrommel 102 und somit eine relative Rotationsbewegung R zwischen der Bremstrommel 102 und den Bremsbelägen 101.

Die Trommelbremsvorrichtung 210 ist dazu eingerichtet, bei einer Betätigung die Bremsbeläge 101 gegen die Bremstrommel 102 zu drücken, um so durch eine Kontaktierung der Bremsbeläge 101 mit der Bremstrommel 102, also eine Kontaktierung zwischen den Reibpartnern 100, 101, eine Bremswirkung zu erzielen. Dabei werden Bremspartikel 120 aus den Bremsbelägen 101 und der Bremstrommel 102 herausgelöst.

Zum Sammeln und optional Abführen Bremspartikel 120 weist die Trommelbremsvorrichtung 210 die Staubsammelanordnung 220 auf. Die Staubsammelanordnung 220 ist rotationsfest beziehungsweise ortsfest innerhalb der Bremstrommel 102 angeordnet. Beispielsweise ist die Staubsammelanordnung 220 an der Ankerplatte 103 befestigt.

Die Dichtung 215 ist umfänglich angeordnet und dazu eingerichtet, die Bremstrommel 102 gegen die Ankerplatte 103 abzutreten, um zwischen der Bremstrommel 102 und der Ankerplatte 103 ein Austreten von Bremspartikeln 120 zu unterbinden. Dabei können die Ankerplatte 103 und die Bremstrommel 102 jeweils einen insbesondere radial äußeren Abschnitt mit demselben Radius aufweisen (in der schematischen Illustration der Figur 1 ist nur der Darstellung halber die Bremstrommel 102 mit einem kleineren Radius als die Ankerplatte 103 dargestellt). Die Dichtung 215 ist zwischen den insbesondere radial äußeren Abschnitt der Bremstrommel 102 und der Ankerplatte 103 angeordnet.

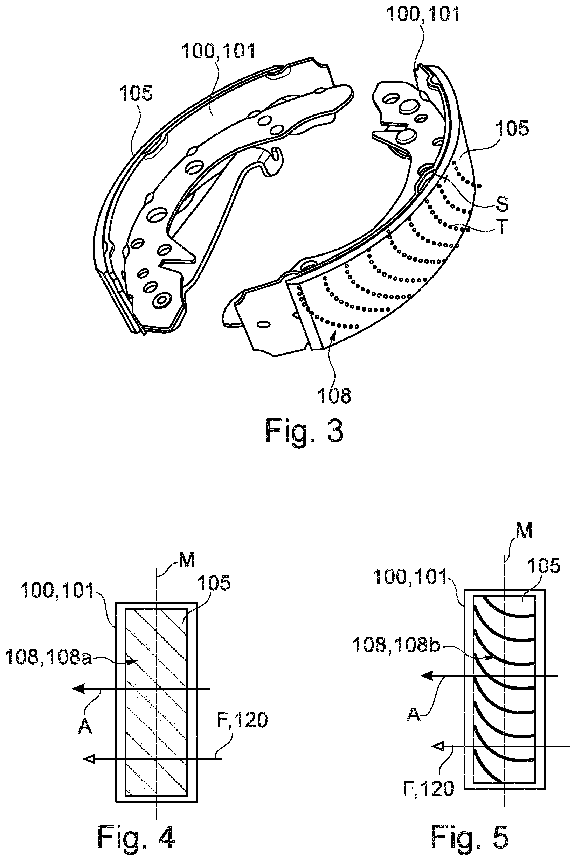

Der Reibpartner 100 weist einen Reibkörper 105 (siehe auch Figuren 3 bis 5) zum Kontaktieren eines zweiten Reibkörpers 115 des zweiten Reibpartners 110 auf. Der Reibkörper 105 eines der Bremsbeläge 101 ist dabei der zum Verschleiß vorgesehene Teil des Bremsbelags 101, also ein radial äußerer Abschnitt des jeweiligen Bremsbelags 101. Der zweite Reibkörper 115 der Bremstrommel 102 ist der zum Kontakt mit den Bremsbelägen 101 vorgesehene Teil der Bremstrommel 102, also ein radial innerer Abschnitt einer Mantelseite der Bremstrommel 102.

Der Reibkörper 105 weist eine strukturierte Vertiefungsanordnung 108 (siehe Figuren 2 bis 5) auf. Die Vertiefungsanordnung 108 ist dazu eingerichtet, bei der relativen Rotationsbewegung R einen Luftstrom F (siehe Pfeile mit punktgestrichener Linie) zum gerichteten Transport der Bremspartikeln 120 zu der Staubsammelanordnung 220 zu erzeugen. Dafür kann die Staubsammelanordnung 220 derart angeordnet sein, dass die Staubsammelanordnung 220 in radialer Richtung zwischen die Bremsbeläge 101 ragt und/oder einen Abzweigabschnitt zum Abzweigen eines in die Staubsammelanordnung 220 leitbaren Teils des Luftstrom F aufweist (nicht gezeigt). Dafür kann die Staubsammelanordnung 220 und/oder der Abzweigabschnitt optional in radialer Richtung zwischen die Bremsbeläge 101 und die Bremstrommel 102 ragen.

Die strukturierte Vertiefungsanordnung 108 ist eine Anordnung von Vertiefungen, die beispielsweise in den Reibkörper 105 eingefräst ist. Die strukturierte Vertiefungsanordnung 108 ist dazu eingerichtet, bei der relativen Rotationsbewegung R den Luftstrom F zu erzeugen und zu leiten. Der Luftstrom F weist dabei ein derartigen Massenstrom beziehungsweise Volumenstrom auf, um die Bremspartikel 120 transportieren zu können.

Die Dichtung 215 und/oder die Ankerplatte 103 weist eine Mehrzahl von umfänglich angeordneten Belüftungsöffnungen 216 auf. Damit kann durch die Belüftungsöffnungen 216 Luft aus einer Umgebung der Trommelbremsvorrichtung 210 angesaugt werden. Die angesaugte Luft wird durch die relative Rotationsbewegung R in Bewegung versetzt und vollzieht den Transport von den Bremspartikel 120 zu der Staubsammelanordnung 220. Die Staubsammelanordnung 220 kann einen Ausgang für den Luftstrom F aus der Bremstrommel 103 bilden. Der Luftstrom F kann in der Staubsammelanordnung 220 gefiltert werden und so die Bremspartikel 120 sammeln. Die Staubsammelanordnung 220 ist derart angeordnet, dass die Bremspartikel 120 von dem Luftstrom F zu der Staubsammelanordnung 220 gefördert werden.

Die Belüftungsöffnungen 216 sind in einem im montierten Zustand oberen Bereich 211 der Trommelbremsvorrichtung 210 angeordnet. Insbesondere sind die Belüftungsöffnungen 216 auf einer Ebene mit der Nabe 205 und darüber angeordnet, was einer Emission von Bremspartikeln 120 entgegenwirken kann.

Die Staubsammelanordnung 220 ist in einem im montierten Zustand in einem unteren Bereich 212 der Trommelbremsvorrichtung 210 angeordnet. Insbesondere ist die Staubsammelanordnung 220 unterhalb der Nabe 205 angeordnet, was ein schwerkraftunterstütztes Transportieren der Bremspartikeln 120 zu der Staubsammelanordnung 220 begünstigen kann.

Figur 2 zeigt eine perspektivische Darstellung von Komponenten einer Trommelbremsvorrichtung 210 gemäß einem Aspekt der Offenbarung. Die Trommelbremsvorrichtung 210 gemäß Figur 2 ist eine Ausführungsform der in Figur 1 gezeigten Trommelbremsvorrichtung 210. Figur 2 wird unter Bezugnahme auf Figur 1 beschrieben.

Dabei ist der Reibpartner 100 die Bremstrommel 102. Mit anderen Worten weist die Bremstrommel 102 einen Reibkörper 105 mit einer strukturierten Vertiefungsanordnung 108 auf.

Die Vertiefungsanordnung 108 weist eine Tiefe T von bis zu 0,5 cm auf. Die Tiefe T ist dabei ein Abstand zwischen einer radial inneren Referenzfläche der Bremstrommel 102 und einen die Vertiefungsanordnung 108 definierenden radial äußeren Abschnitt der Bremstrommel 102. Dabei ist die radial innere Referenzfläche eine Kontaktfläche, an der der Reibkörper 105 der Bremstrommel 102 die Bremsbeläge 101 kontaktiert.

Figur 3 zeigt eine perspektivische Darstellung von Bremsbelägen 101 einer Trommelbremsvorrichtung 210 gemäß einem Aspekt der Offenbarung. Der Bremsbelag 101 gemäß Figur 3 ist eine alternative Ausführungsform zu den in Figur 2 gezeigten Bremsbelag 101. Figur 3 wird unter Bezugnahme auf Figuren 1 und 2 beschrieben.

Der Reibpartner 100 ist ein Bremsbelag 101. Mit anderen Worten weist der Bremsbelag 101 einen Reibkörper 105 mit einer strukturierten Vertiefungsanordnung 108 auf.

Der Reibkörper 105 ist insbesondere der zum Verschleiß vorgesehene Teil des Bremsbelags 101. Der Reibkörper 105 weist eine Stärke S auf, also eine radiale Abmessung des Bremsbelags 101, in der der Bremsbelag 101 zum Verschleiß vorgesehen ist. Die Vertiefungsanordnung 108 weist eine Tiefe T auf, die wenigstens der Stärke S des Bremsbelags 101 entspricht.

Figur 4 zeigt eine schematische Darstellung einer Draufsicht auf einen Bremsbelag 101 einer Trommelbremsvorrichtung 210 gemäß einem Aspekt der Offenbarung. Figur 4 ist eine schematische Ansicht des Bremsbelags 101 gemäß Figur 3. Figur 4 wird unter Bezugnahme auf Figuren 1 bis 3 beschrieben.

Die Trommelbremsvorrichtung 210 definiert eine Achse A und der Bremsbelag 101 definiert eine Mitte M. Die Mitte M ist beispielsweise eine Symmetrieachse des Bremsbelag 101 und senkrecht zu der Achse A angeordnet.

Die Vertiefungsanordnung 108 umfasst eine Mehrzahl von gegenüber der Achse A und/oder gegenüber der Mitte M geneigter Nuten 108a. Die Neigung der Nuten 108a definiert eine Pumprichtung des Luftstroms F. Die Nuten 108a können derart geneigt werden, dass der Luftstrom F von einer fahrzeugabgewandten Stirnseite der Bremstrommel 103 fort und/oder zum Inneren der Bremstrommel 103 gerichtet ist. Damit kann der Luftstrom F effektiv der Staubsammelanordnung 220 zugeführt werden.

In einer anderen Ausführungsform kann die Bremstrommel 101 einen Reibkörper 105 mit einer derartigen Vertiefungsanordnung 108 aufweisen.

Figur 5 zeigt eine schematische Darstellung einer Draufsicht auf einen Bremsbelag 101 einer Trommelbremsvorrichtung 210 gemäß einem Aspekt der Offenbarung.

Die Vertiefungsanordnung 108 umfasst eine Mehrzahl von außermittig angeordneten Spiralrillen 108b. Die Spiralrillen 108b weisen entlang ihrer Kontur, also beispielsweise entlang der Achse A eine sich ändernde Krümmung auf. Die Spiralrillen 108b als Abschnitte einer Spirale können derart angeordnet werden, dass der Luftstrom F von einer fahrzeugabgewandten Stirnseite der Bremstrommel 103 fort und/oder zum Inneren der Bremstrommel 103 gerichtet ist. Damit kann der Luftstrom F effektiv der Staubsammelanordnung 220 zugeführt werden.

In einer anderen Ausführungsform kann die Bremstrommel 101 einen Reibkörper 105 mit einer derartigen Vertiefungsanordnung 108 aufweisen.

In einer weiteren Ausführungsform ist es möglich, dass beide Reibkörper 105, 115 beziehungsweise die Bremstrommel 103 und die Bremsbeläge 102 über eine strukturierte Vertiefungsanordnung 108 wie mit Bezug zu Figuren 1 bis 5 beschrieben aufweisen.

### Bezugszeichen (Teil der Beschreibung)

- 100: Reibpartner
- 101: Bremsbelag
- 102: Bremstrommel
- 103: Ankerplatte
- 105: Reibkörper
- 108: Vertiefungsanordnung
- 108a: Nut
- 108b: Spiralrillen
- 110: zweiter Reibpartner
- 115: zweiter Reibkörper
- 120: Bremspartikel

- 200a: Fahrzeug
- 200b: Nutzfahrzeug
- 205: Radnabe
- 210: Trommelbremsvorrichtung
- 211: oberer Bereich
- 212: unterer Bereich
- 215: Dichtung
- 216: Belüftungsöffnung
- 220: Staubsammelanordnung

- A: Achse
- F: Luftstrom
- M: Mitte
- R: relative Rotationsbewegung
- S: Stärke
- T: Tiefe

## Patentansprüche

1. Reibpartner (100) für eine Trommelbremsvorrichtung (210) mit einer Staubsammelanordnung (220) eines Fahrzeugs (200a), insbesondere Nutzfahrzeugs (200b); wobei
- der Reibpartner (100) einen Reibkörper (105) zum Kontaktieren eines zweiten Reibkörpers (115) eines zweiten Reibpartners (110) aufweist;
- der Reibkörper (105) eine strukturierte Vertiefungsanordnung (108) aufweist; und
- die Vertiefungsanordnung (108) dazu eingerichtet ist, bei einer relativen Rotationsbewegung (R) des Reibpartners (100) gegenüber dem zweiten Reibpartners (110) einen Luftstrom (F) zum gerichteten Transport von Bremspartikeln (120) zu der Staubsammelanordnung (220) zu erzeugen.

2. Reibpartner (100) nach Anspruch 1, wobei die Vertiefungsanordnung (108) eine Mehrzahl von außermittig angeordnete Spiralrillen (108b) umfasst.

3. Reibpartner (100) nach Anspruch 1 oder 2, wobei
- die Trommelbremsvorrichtung (210) eine Achse (A) definiert, und
- die Vertiefungsanordnung (108) eine Mehrzahl von gegenüber der Achse (A) geneigter Nuten (108a) umfasst.

4. Reibpartner (100) nach einem der vorherigen Ansprüche, wobei der Reibpartner (100) ein Bremsbelag (101) ist.

5. Reibpartner (100) nach Anspruch 4, wobei die Vertiefungsanordnung (108) eine Tiefe (T) aufweist, die wenigstens einer Stärke (S) des Bremsbelags (101) entspricht.

6. Reibpartner (100) nach einem der Ansprüche 1 bis 3, wobei der Reibpartner (100) eine Bremstrommel (102) ist.

7. Reibpartner (100) nach Anspruch 6, wobei die Vertiefungsanordnung (108) eine Tiefe (T) von bis zu 0,5 cm aufweist.

8. Trommelbremsvorrichtung (210) für ein Fahrzeug (200a), insbesondere Nutzfahrzeug (200b), umfassend einen Reibpartner (100) nach einem der vorherigen Ansprüche, einen zweiten Reibpartner (110) und eine Staubsammelanordnung (220).

9. Trommelbremsvorrichtung (210) nach Anspruch 8, wobei
- die Trommelbremsvorrichtung (210) eine Ankerplatte (103) und eine umlaufende Dichtung (215) zum Abdichten einer Bremstrommel (102) gegen die Ankerplatte (103) aufweist, und
- die Dichtung (215) und/oder die Ankerplatte (103) mindestens eine Belüftungsöffnung (216) aufweist.

10. Trommelbremsvorrichtung (210) nach Anspruch 9, wobei
- die mindestens eine Belüftungsöffnung (216) in einem im montierten Zustand oberen Bereich (211) der Trommelbremsvorrichtung (210) angeordnet ist;
- die Staubsammelanordnung (220) in einem im montierten Zustand in einem unteren Bereich (212) der Trommelbremsvorrichtung (210) angeordnet ist; und
- die Staubsammelanordnung (220) derart angeordnet ist, dass Bremspartikeln (120) von dem Luftstrom (F) zu der Staubsammelanordnung (220) gefördert werden.

11. Fahrzeug (200a), insbesondere Nutzfahrzeug (200b), umfassend eine Trommelbremsvorrichtung (210) nach einem der Ansprüche 8 bis 10.
